(19) Europäisches Patentamt

European Patent Office

Office européen des brevets

(11) **EP 2 017 784 A2**

(12) **EUROPÄISCHE PATENTANMELDUNG**

(43) Veröffentlichungstag:
**21.01.2009 Patentblatt 2009/04**

(51) Int Cl.:
***G06T 5/00*** *(2006.01)*

(21) Anmeldenummer: **08010070.4**

(22) Anmeldetag: **02.06.2008**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(30) Priorität: **15.06.2007 DE 102007027642**

(71) Anmelder: **Micronas GmbH
79108 Freiburg i. Br. (DE)**

(72) Erfinder:
• **Hahn, Marko
85579 Neubiberg (DE)**
• **Schu, Markus
85435 Erding (DE)**
• **Duan, Harun
80686 München (DE)**

(74) Vertreter: **Bickel, Michael
Westphal, Mussgnug & Partner
Patentanwälte
Herzog-Wilhelm-Strasse 26
80331 München (DE)**

(54) **Verfahren zur Bearbeitung einer Bildfolge mit aufeinanderfolgenden Videobildern zur Verbesserung der räumlichen Auflösung**

(57) Beschrieben wird ein Verfahren zur Bearbeitung einer Bildfolge mit aufeinanderfolgenden Videobildern, die jeweils wenigstens einen Bildbereich mit einer Anzahl von Bildpunkten aufweisen, denen jeweils wenigstens ein Intensitätswert zugeordnet ist. Das Verfahren umfasst für jeden Bildbereich
- das Ermitteln eines Bewegungsmaßes, derart, dass das Bewegungsmaß ein Maß für eine zeitliche Änderung eines Bildinhalts des Bildbereiches darstellt,

- das Variieren der Intensitätswerte der Bildpunkte des Bildbereiches gegenüber den zugeordneten Intensitätswerten von Videobild zu Videobild, wobei ein Maß für die Variation der Intensitätswerte von dem ermittelten Bewegungsmaß abhängig ist und eine Änderung der Intensitätswerte gegenüber den zugeordneten Intensitätswerten um so stärker ist, je größer eine durch das Bewegungsmaß repräsentierte Bewegung ist.

**Beschreibung**

Die Erfindung betrifft ein Verfahren und eine Vorrichtung zur Bearbeitung einer Bildfolge mit aufeinanderfolgenden Videobildern zur Verbesserung einer räumlichen Auflösung von Videobildern mit bewegtem Inhalt bzw. zur Reduzierung einer Bewegungsunschärfe.

Die Darstellung realer Vorgänge durch eine Videobildfolge ist unvermeidlich mit einem Verlust an räumlicher und zeitlicher Auflösung verbunden. Ein Verlust an räumlicher Auflösung entsteht dadurch, dass zur Darstellung eines Videobildes durch Anzeigevorrichtungen, wie beispielsweise Röhrenbildschirme, LCDs (Liquid Crystal Displays), Plasmabildschirme oder Projektionssysteme, nur eine begrenzte Anzahl von Bildpunkten zur Verfügung steht. Ein Verlust an zeitlicher Auflösung entsteht dadurch, dass eine Videobildfolge lediglich eine zeitlich diskrete Folge von Einzelbildern, beispielsweise mit einer Frequenz von 50Hz oder 100Hz, darstellt. Der Eindruck einer kontinuierlichen Darstellung ergibt sich für einen Betrachter dadurch, dass die menschliche Wahrnehmung nicht in der Lage ist, Bildfolgen mit einer Bildfrequenz von mehr als 50 oder 60Hz noch zeitlich aufzulösen.

Die von einem Betrachter wahrgenommene Helligkeit eines in einer Bildfolge dargestellten Objekts entspricht dem Integral der vom Objekt ausgehenden Leuchtdichte bzw. Belichtungsintensität über der Zeit. Ein sich in der Realität kontinuierlich bewegendes Objekt erscheint in zeitlich aufeinanderfolgenden Videobildern der Bildfolge an unterschiedlichen Positionen innerhalb der einzelnen Bilder. Die menschliche Wahrnehmung integriert hierbei die Leuchtdichte nicht nur zeitlich sondern auch räumlich über die Bewegungsrichtung des Objekts. Ergebnis ist eine wahrgenommene Bewegungsunschärfe (engl.: motion blur). Kanten des Objekts, die quer zu der Bewegungsrichtung verlaufen und die in den einzelnen Bildern scharf bzw. kontrastreich dargestellt sind, erscheinen für den Betrachter dennoch unscharf. Diese Unschärfe ist um so ausgeprägter, je schneller sich das Objekt bewegt, je größer also ein Abstand zwischen Positionen des Objekts in aufeinanderfolgenden Bildern ist, und je länger das Objekt innerhalb eines Bildes belichtet wird. Bei Röhrenbildschirmen, bei denen jeder Bildpunkt der Bildröhre nur für kurze Zeit belichtet bzw. durch den Elektronenstrahl abgetastet wird, ist dieser Effekt weniger ausgeprägt als bei LCD-Bildschirmen, bei denen ein Bildpunkt für die gesamte Dauer eines Bildes belichtet wird. Ausführlich beschrieben ist der erläuterte Unschärfeeffekt in US 2006/0280249 A1 (Poon).

Zur Reduktion dieses Unschärfeeffektes ist es bekannt, eine Dunkeltastung einzuführen, d.h. zwischen zwei aufeinanderfolgenden Bildern ein schwarzes Bild einzufügen (black frame insertion). Bei LCD-Monitoren kann dies durch eine intervallweise Abschaltung der Hintergrundbeleuchtung erfolgen. Ergebnis ist allerdings eine Reduktion der Bildhelligkeit.

In B.W. Lee et al.: "Mastering the Moving Image: Refreshing TFT-LCDs at 120Hz", SID '05, Digest, Seiten 1583-1585 ist ein Bildverarbeitungsverfahren beschrieben, bei dem Bilder einer 60Hz-Bildfolge wiederholt dargestellt werden, um dadurch eine 120Hz-Bildfolge zu erhalten. Eines der zwei gleichen Bilder wird dabei heller als das wiederholte Ursprungsbild, das andere wird dunkler als das wiederholte Ursprungsbild dargestellt. Besonders bei hellen Objekten kann dieses Verfahren allerdings zu einer wahrgenommenen Bewegungsunschärfe führen.

Eine weitere Möglichkeit zur Reduktion des Unschärfeeffektes ist eine Erhöhung der Bildauflösung durch bewegungsrichtige bzw. bewegungskompensierte Interpolation von einem oder mehreren Zwischenbildern zwischen zwei aufeinanderfolgenden Bildern der Ausgangsbildfolge. Dieses Vorgehen ist beschrieben in M. Schu et al.:" System-on_ Silicon Solution for High Quality HDTV Video Deinterlacing and Frame Rate Conversion for Flat Panel Displays", ADEAC 2005, Portland, USA, Oct. 25-27, 2005 oder in M. Schu, P. Rieder:" Frame Rate Conversion IC for 120 Hz Flat Panel Displays", Electronic Displays 2007, Nürnberg, 14.-15. Februar 2007.

Aufgabe der vorliegenden Erfindung ist es, ein Verfahren zur Bearbeitung einer Bildfolge mit aufeinanderfolgenden Videobildern zur Verfügung zu stellen, das zu einer Reduktion einer wahrgenommenen Unschärfe bei sich bewegenden Objekten führt.

Diese Aufgabe wird durch Verfahren nach Anspruch 1 und 13 gelöst. Ausgestaltungen und Weiterbildungen der Erfindung sind Gegenstand von Unteransprüchen.

Die Erfindung betrifft ein Verfahren zur Bearbeitung einer Bildfolge mit aufeinanderfolgenden Videobildern, die jeweils wenigstens einen Bildbereich mit einer Anzahl von Bildpunkten aufweisen, denen jeweils ein Intensitätswert, bzw. Helligkeitswert oder Luminanzwert, zugeordnet ist. Bei dem Verfahren ist für jeden Bildbereich vorgesehen ein Bewegungsmaß, derart zu ermitteln, dass das Bewegungsmaß ein Maß für eine zeitliche Änderung eines Bildinhalts des Bildbereiches darstellt, und von Videobild zu Videobild Intensitätswerte der Bildpunkte des Bildbereiches gegenüber den zugeordneten Intensitätswerten zu variieren bzw. zu verändern. Ein Maß für eine Variation der Intensitätswerte ist dabei von dem ermittelten Bewegungsmaß abhängig und eine Änderung der Intensitätswerte ist gegenüber den zugeordneten Intensitätswerten um so stärker, je größer eine durch das Bewegungsmaß repräsentierte Bewegung ist.

Die Intensitätswerte können hierbei insbesondere so variiert werden, dass sie in einem Bild angehoben und in dem zeitlich nachfolgenden Bild abgesenkt werden. Ein Maß für das Anheben und Absenken der Intensitätswerte ist dabei von dem ermittelten Bewegungsmaß abhängig.

Sofern das für einen Bildbereich ermittelte Bewegungsmaß auf das Vorhandensein von Bewegung in dem Bildbereich hinweist, variiert bei dem erläuterten Verfahren die Helligkeit dieses Bildbereiches von Videobild zu Videobild, wobei die Helligkeitsänderungen umso ausgeprägter sind, je stärker die durch das Bewegungsmaß repräsentierte Bewegung ist. Der Bildbereich wird also in einem Bild heller dargestellt, als es die den Bildpunkten des Bildbereiches zugeordneten Intensitätswerte vorgeben, und der Bildbereich wird in einem zeitlich vorangehenden oder zeitlich nachfolgenden Bild dunkler dargestellt, als es die den Bildpunkten des Bildbereiches zugeordneten Intensitätswerte vorgeben. Ein Helligkeitskontrast, der sich für einen Bildbereich zwischen zwei aufeinanderfolgenden Videobildern ergibt, ist dabei also umso ausgeprägter, je stärker eine für den Bildbereich ermittelte Bewegung ist. Wie eingangs erläutert, ist eine wahrgenommene Unschärfe umso ausgeprägter, je schneller sich ein Objekt in der dargestellten Videobildfolge bewegt, je größer also der Abstand zwischen den Positionen des Objekts in den einzelnen Bildern ist. Der bei dem erläuterten Verfahren mit zunehmender Bewegung zunehmende Helligkeitskontrast zwischen einzelnen Bildbereichen wirkt einer solchen wahrgenommenen Unschärfe entgegen.

Das erläuterte Verfahren eignet sich besonders in Verbindung mit einem bewegungskompensierten Interpolationsverfahren, bei dem ein oder mehrere Zwischenbilder zwischen zwei zeitlich aufeinanderfolgenden Bildern einer Bildfolge interpoliert werden. Bei einem solchen Verfahren wird zu Bildbereichen eines zu interpolierenden Zwischenbildes bekanntlich jeweils ein Bewegungsvektor ermittelt, der für die Interpolation des Bildinhaltes des jeweiligen Bildbereiches verwendet wird. Ein solcher Bewegungsvektor stellt unmittelbar ein Bewegungsmaß dar, wobei die Bewegung umso größer bzw. stärker ist, je grö-ßer der Betrag des jeweiligen Bewegungsvektors ist. Verfahren zur Ermittlung von Bewegungsvektoren und zur bewegungskompensierten Interpolation von Zwischenbildern sind hinlänglich bekannt, so dass auf weitere Ausführungen hierzu verzichtet werden kann.

Die Erfindung betrifft außerdem ein Verfahren zur Bearbeitung einer Bildfolge, die Originalbilder und zwischen jeweils zwei Originalbildern wenigstens ein bewegungskompensiertes Zwischenbild mit wenigstens einem Bildbereich aufweist, wobei der wenigstens eine Bildbereich eine Anzahl von Bildpunkten aufweist, denen jeweils wenigstens ein Intensitätswert zugeordnet ist. Bei diesem Verfahren ist vorgesehen, ein Gütemaß einer Bewegungsschätzung des wenigstens einen Bildbereiches des Zwischenbildes zu ermitteln und die Intensitätswerte der Bildpunkte des Bildbereiches des Zwischenbildes abhängig von dem ermittelten Gütemaß zu variieren. Bei einer "schlechten" Bewegungsschätzung können hierbei die Intensitätswerte des Bildbereiches des Zwischenbildes verringert werden, wodurch das Zwischenbild optisch etwas in den Hintergrund rückt, bzw, aufgrund der geringeren Intensität weniger betont wird, so dass Fehler der Bewegungsschätzung weniger auffallen.

Ausführungsbeispiele der vorliegenden Erfindung werden nachfolgend anhand von Figuren näher erläutert.

Figur 1    zeigt schematisch eine Videobildfolge mit zeitlich aufeinanderfolgenden Videobildern, die jeweils in eine Anzahl Bildbereiche unterteilt sind.

Figur 2    veranschaulicht die Unterteilung eines Bildbereiches in eine Anzahl von Bildpunkten, denen jeweils ein Intensitätswert bzw. Helligkeitswert zugeordnet ist.

Figur 3    zeigt beispielhaft verschiedene Abbildungskurven zur bewegungsabhängigen Abbildung eines einem Bildpunkt zugeordneten Intensitätswertes auf einen für die Darstellung des Bildpunktes verwendeten Intensitätswert.

Figur 4    zeigt beispielhaft weitere Abbildungskurven zur Abbildung eines einem Bildpunkt zugeordneten Intensitätswertes auf einen für die Darstellung des Bildpunktes verwendeten Intensitätswert.

Figur 5    zeigt weitere Abbildungskurven zur Abbildung eines einem Bildpunkt zugeordneten Intensitätswertes auf einen für die Darstellung des Bildpunktes verwendeten Intensitätswert.

Figur 6    veranschaulicht schematisch eine Vorrichtung zur Durchführung des erfindungsgemäßen Verfahrens.

Figur 7    zeigt ausschnittsweise eine Bildfolge, die zwischen zwei Originalbildern jeweils ein bewegungskompensiertes Zwischenbild aufweist, zur Erläuterung einer Variante des erfindungsgemäßen Verfahrens.

In den Figuren bezeichnen, sofern nicht anders angegeben, gleiche Bezugszeichen gleiche Signale und Bildbestandteile mit gleicher Bedeutung.

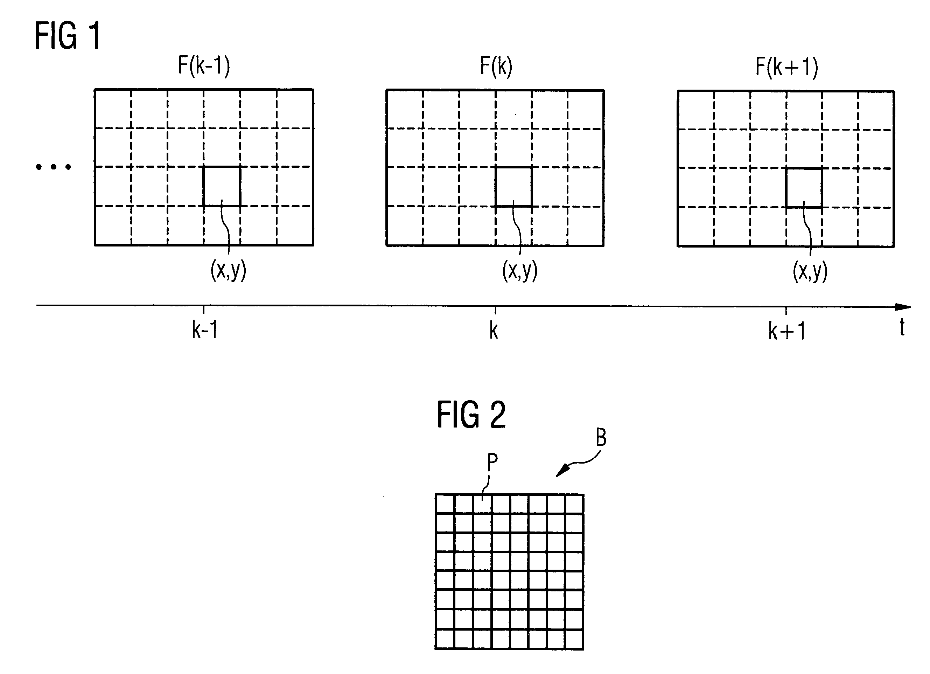

Die Erfindung betrifft ein Verfahren zur Bearbeitung einer Bildfolge mit aufeinanderfolgenden Videobildern, die jeweils wenigstens einen Bildbereich mit einer Anzahl von Bildpunkten aufweisen. Figur 1 zeigt schematisch einen zeitlichen Ausschnitt mit drei aufeinanderfolgenden Videobildern F(k-1), F(k), F(k+1) einer solchen Bildfolge. k bezeichnet dabei einen Zeitindex.

Die einzelnen Bilder sind in dem dargestellten Beispiel in eine Anzahl von matrixartig angeordneten Bildbereichen unterteilt, die in Figur 1 gestrichelt dargestellt sind. Strichpunktiert ist in diesen Bildern ein Bildbereich an einer Bildbereichposition (x,y) dargestellt, der zu Zwecken der Erläuterung nachfolgend näher betrachtet wird.

Jeder der Bildbereiche umfasst bezugnehmend auf Figur 2 eine Anzahl matrixartig angeordneter Bildpunkte P, denen jeweils Bildinformationswerte für die Darstellung eines farbigen Bildpunktes mit einer vorgegebenen Intensität zugeordnet sind. Je nach verwendetem Farbraum können diese Bildinformationswerte drei sogenannte RGB-Werte oder drei sogenannte YUV- bzw. YCbCr-Werte sein. Von den drei RGB-Werten repräsentiert jeweils einer die Intensität einer der drei Grundfarben rot, grün und blau, die für die Darstellung des Bildpunkts verwendet werden, während von den drei YUV-Werten einer (Y_Wert) die Helligkeit bzw. Luminanz des Bildpunktes und die beiden anderen (U- und V-Werte) je einen Chrominanzwert repräsentieren. Je nach verwendetem Farbraum sind einem Bildpunkt also drei oder nur ein Intensitätswert zugeordnet. Mit Intensitäts- oder Helligkeitswert ist nachfolgend entweder ein RGB-Wert des RGB-Farbraumes oder ein Luminanzwert des YUV-Farbraumes bezeichnet. Das nachfolgend erläuterte Verfahren kann bei einer RGB-Darstellung somit parallel auf jeden der drei RGB-Werte und bei einer YUV-Darstellung nur auf den Luminanzwert angewendet werden.

Ein "Bildbereich" ist somit eine Anzahl von Bildpunkten an einer bestimmten Position innerhalb der einzelnen Videobilder F(k-1), F(k), F(k+1). Die den Bildpunkten des Bildbereiches zugeordneten Intensitätswerte können sich dabei von Bild zu Bild ändern, und zwar abhängig davon, ob der jeweilige Bildbereich ein sich bewegendes oder ein unbewegtes Objekt darstellt.

Bei dem erfindungsgemäßen Verfahren ist vorgesehen, zu den einzelnen Bildbereichen Bewegungsmaße zu ermitteln, die eine Information dahingehend enthalten, ob der jeweilige Bildbereich ein sich bewegendes oder ein unbewegtes Objekt zeigt. Abhängig von diesem für jeden Bildbereich ermittelten Bewegungsmaß ist dabei vorgesehen, die den Bildpunkten des Bildbereichs zugeordneten Helligkeitswerte zu modifizieren, und zwar beispielsweise derart, dass diese Helligkeitswerte abwechselnd von Bild zu Bild gegenüber den zugeordneten Helligkeitswerten angehoben und abgesenkt werden.

Bei einem Ausführungsbeispiel des erfindungsgemäßen Verfahrens ist vorgesehen, für jedes Videobild F(k-1), F(k), F(k+1) der Bildfolge Bewegungsmaße für die einzelnen Bildbereiche zu ermitteln. Dieses Bewegungsmaß wird dabei zur Modifikation der den Bildpunkten des jeweiligen Bildbereiches zugeordneten Intensitätswerte verwendet, wobei diese Modifikation abwechselnd von Bild zu Bild ein Anheben und Absenken des Intensitätswertes bedeutet. Mit x, y sei nachfolgend die Position eines Bildbereiches innerhalb der Videobilder der Bildfolge bezeichnet. $L_i(x, y)$ bezeichnet nachfolgend den einem beliebigen Bildpunkt dieses Bildbereiches zugeordneten Helligkeitswert, und $V(x, y)$ bezeichnet nachfolgend ein dem Bildbereich zugeordnetes Bewegungsmaß. Für einen modifizierten Helligkeitswert $L_i'(x, y)$ des Bildpunktes gilt also:

$$L_i'(x, y) = L_i(x, y) \pm \Delta L_i(x, y) \quad \text{mit} \quad \Delta L_i(x, y) = f(V(x, y)). \qquad (1)$$

$\Delta L_i(x, y)$ bezeichnet dabei das Maß, um welches der dem Bildpunkt zugeordnete Helligkeitswert $L_i(x, y)$ modifiziert wird. Dieses Modifikationsmaß $\Delta L_i(x, y)$ ist in erläuterter Weise eine Funktion des für den Bildbereich (x,y) ermittelten Bewegungsmaßes. Das Modifikationsmaß bzw. die Veränderung gegenüber dem ursprünglich zugeordneten Helligkeitswert ist dabei umso größer, je stärker die durch das Bewegungsmaß repräsentierte Bewegung ist.

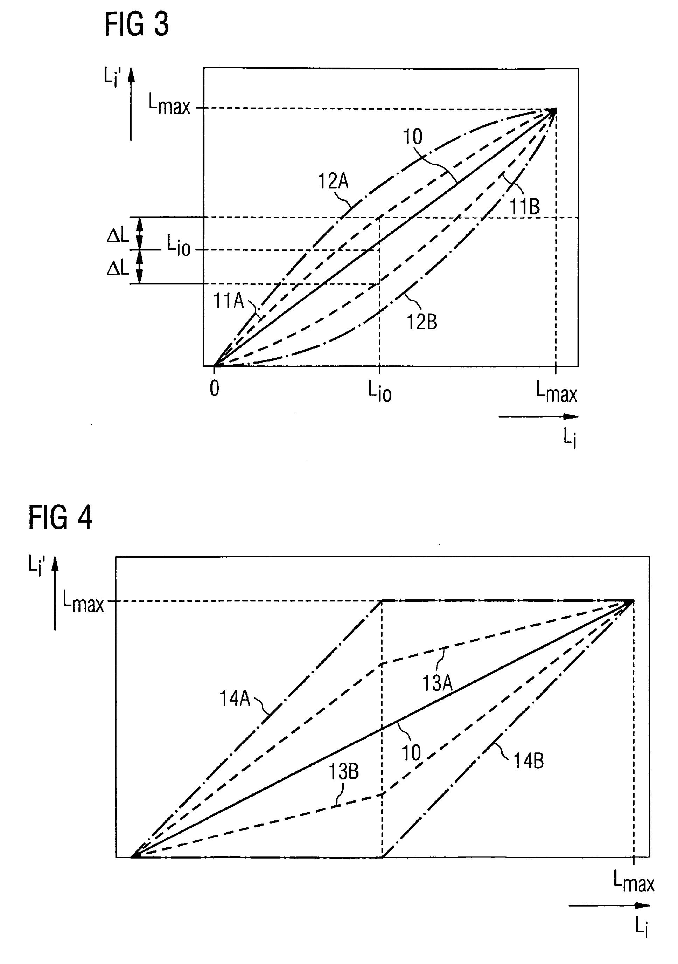

Figur 3 zeigt beispielhaft Abbildungskurven zur Abbildung eines einem Bildpunkt zugeordneten Helligkeitswert $L_i$ auf einen modifizierten Helligkeitswert $L_i'$. Die durchgezogene Linie, die in Figur 3 zu Vergleichszwecken dargestellt ist, repräsentiert dabei den Fall, bei dem die Intensitätswerte $L_i$ unverändert auf die modifizierten Werte $L_i'$ abgebildet werden, für diese Kurve, die nachfolgend als "identische Abbildungskurve" bezeichnet ist, gilt also: $L_i = L_i'$. Eine in Figur 3 mit 11A bezeichnete, gestrichelt dargestellte erste Abbildungskurve repräsentiert den Fall, bei dem die modifizierten Helligkeitswerte $L_i'$ gegenüber den ursprünglich zugeordneten Helligkeitswerten $L_i$ angehoben sind. 11B bezeichnet eine zu der Abbildungskurve 11A gehörige zweite Abbildungskurve, durch welche modifizierte Helligkeitswerte $L_i'$ erhalten werden, die gegenüber den ursprünglich zugeordneten Helligkeitswerten $L_i$ verringert sind. Eine der beiden ersten und zweiten Abbildungskurven 11A, 11B wird hierbei zur Modifikation der Intensitätswerte der Bildpunkte eines Bildbereiches in einem ersten Bild, die andere der beiden Abbildungskurven wird zur Modifikation der Intensitätswerte der Bildpunkte desselben Bildbereiches in einem dem ersten Bild zeitlich vorausgehenden oder zeitlich nachfolgenden zweiten Bild verwendet. Diese beiden Abbildungskurven 11A, 11B liegen in dem dargestellten Beispiel derart symmetrisch um die identische Abbildungskurve 10, dass für einen gegebenen Intensitätswert der Betrag der Differenz zwischen diesem Intensitätswert und einem auf der ersten Abbildungskurve 11A liegenden zugehörigen ersten modifizierten Intensitätswert gleich ist zu dem Betrag der Differenz zwischen dem gegebenen Intensitätswert und einem auf der zweiten Abbildungskurve 11B liegenden zugehörigen zweiten modifizierten Intensitätswert. Dies ist in Figur 3 für einen Intensitätswert $L_{i0}$ veranschaulicht. Für einen diesem Intensitätswert $L_{i0}$ zugeordneten, auf der ersten Abbildungskurve 11A liegenden Intensitätswert gilt hierbei: $L_{i0} + \Delta L$, während für einen dem Intensitätswert $L_{i0}$ zugeordneten, auf der zweiten Abbildungskurve 11B liegenden modifizierten Intensitätswert gilt: $L_{i0} - \Delta L$. Die Summe der für zwei aufeinanderfolgende Bilder bei diesem Verfahren erhaltenen Intensitätswerte entspricht in diesem Fall der Summe der ursprünglich zugeordneten Intensitätswerte.

Der Differenzwert $\Delta L$, durch welchen sich die modifizierten Intensitätswerte von dem ursprünglich zugeordneten Intensitätswert unterscheiden, ist in erläuterter Weise abhängig von dem Bewegungsmaß des Bildbereiches, in dem der Bildpunkt mit dem zugeordneten Intensitätswert liegt. Bezugnehmend auf Figur 3 kann dieser Differenzwert oder Modifikationswert $\Delta L$ auch abhängig sein vom Absolutwert des jeweiligen Intensitätswertes $L_i$. Für Intensitätswerte $L_i$, die in der Mitte zwischen Null und einem maximal möglichen Intensitätswert Lmax liegen, ist dieser Differenzwert $\Delta L$ am größten. Dieser Differenzwert $\Delta L$ nimmt dabei in Richtung zu dem maximalen Intensitätswert Lmax und in Richtung zu Null hin ab. Die in Figur 3 dargestellten Abbildungskurven 11A, 11B, die die zugeordneten Intensitätswerte auf modifizierte Intensitätswerte abbilden, sind beispielsweise Parabeläste. Unter den Nebenbedingungen, $L'_i(0) = 0$ und $L'_i(L_{max}) = L_{max}$ gilt für die "untere" Abbildungskurve 11B:

$$L'_i(L_i) = \alpha \cdot L_i^2 + (1-\alpha \cdot L_{max}) \cdot L_i \qquad (2a),$$

und für die obere Abbildungskurve 11A:

$$L'_i(L_i) = -\alpha \cdot L_i^2 + (1+\alpha \cdot L_{max}) \cdot L_i \qquad (2b).$$

Eine Variation der Intensität erfolgt hierbei abhängig von dem Parameter $\alpha$, wobei für $\alpha =0$ die identische Abbildungskurve erhalten wird, also keine Variation der Intensität erfolgt. Die Variation der Intensität ist umso größer, je grö-ßer der Parameter c der die Abbildungskurven repräsentierenden Funktionen (2a) und (2b) ist.

Mit 12A, 12B sind in Figur 3 zwei weitere Abbildungskurven bezeichnet, die einen größeren Abstand zu der Abbildungskurve 10 wie die Abbildungskurven 11A, 11B aufweisen, die also eine stärkere Modifikation eines gegebenen Intensitätswertes im Vergleich zu den Abbildungskurven 11A, 11B bewirken und die somit für größere Bewegungsmaße verwendet werden. Der Parameter c der diese Kurven repräsentierenden Funktionen (2a), (2b) ist für diese Kurven 12A, 12B größer als für die Kurven 11A, 11B.

Durch die erläuterte Modifikation mit einem abwechselnden Anheben und Absenken der Intensitätswerte entsteht ein Intensitätskontrast für die Bildpunkte eines Bildbereiches zwischen zwei aufeinanderfolgenden Bildern. Dieser Kontrast ist dabei umso ausgeprägter, je größer der Abstand der für die Modifikation der Intensitätswerte verwendeten Abbildungskurven ist.

Figur 3 zeigt lediglich zwei Gruppen mit jeweils zwei zusammengehörigen Abbildungskurven 11A, 11B bzw. 12A, 12B und die identische Abbildungskurve. Die identische Abbildungskurve, die keine Modifikation des Intensitätswertes bewirkt, wird beispielsweise auf Bildbereiche angewendet, deren Bewegungsmaße zwischen Null und einem vorgegebenen ersten Schwellenwert liegen. Die Abbildungskurven der ersten Gruppe werden dann auf solche Bildbereiche angewendet, deren Bewegungsmaße zwischen dem ersten Schwellenwert und einem zweiten Schwellenwert liegen, während die Abbildungskurven der zweiten Gruppe auf Bildbereiche mit Bewegungsmaßen größer als dem zweiten Schwellenwert angewendet werden. Die Verwendung von nur zwei Gruppen mit modifizierenden Abbildungskurven ist lediglich als Beispiel zu verstehen. Selbstverständlich kann der Wertebereich der Bewegungsmaße abweichend von dem erläuterten Beispiel in mehr als drei Intervalle unterteilt werden, von denen für Bewegungsmaße aus dem die Null enthaltenden Wertebereich die identische Abbildungskurve und für Bewegungsmaße aus den übrigen Wertebereichen jeweils eine Gruppe mit zwei modifizierenden Abbildungskurven verwendet wird, wobei der Abstand dieser Kurven von der identischen Abbildungskurve mit zunehmendem Bewegungsmaß zunimmt.

Ein weiteres Beispiel für Abbildungskurven zur Abbildung eines einem Bildpunkt zugeordneten Intensitätswert $L_i$ auf einen modifizierten Intensitätswert $L_i'$ ist in Figur 4 dargestellt. Zum Vergleich zeigt Figur 4 - entsprechend der Darstellung in Figur 3 - als durchgezogene Linie die identische Abbildungskurve 10. Mit 13A, 13B sind in Figur 4 Abbildungskurven einer ersten Gruppe von Abbildungskurven bezeichnet, denen eine erste 13A eine Anhebung der Intensitätswerte gegenüber den zugeordneten Intensitätswerte bewirkt, und von denen eine zweite 13B eine Absenkung der Intensitätswerte gegenüber den zugeordneten Intensitätswerten bewirkt. Mit 14A, 14B sind in Figur 4 Abbildungskurven einer zweiten Gruppe bezeichnet, von denen eine erste 14A eine Anhebung der Intensitätswerte gegenüber den zugeordneten Intensitätswerten bewirkt, während eine zweite 14B eine Absenkung der Intensitätswerte bewirkt. Die in Figur 4 dargestellten Abbildungskurven setzten sich jeweils aus zwei Geradenabschnitten zusammen. Die ersten Abbildungskurven 13A, 14A der beiden Gruppen steigen hierbei für Intensitätswerte, die kleiner sind als ein Schwellenwert, steiler an als die identische Abbildungskurve, und steigen danach bis zu dem Maximalwert Lmax flacher an, als die identische Abbildungskurve 10. Die zweiten Abbildungskurven 13B, 14B der beiden Gruppen steigen bis zu dem Schwellenwert flacher als die identische Abbildungskurve und danach steiler als diese an. Für die durch die ersten Abbildungskurven bewirkten Abbildungen gilt dabei:

$$L_i' = a \cdot L_i \quad \text{für} \quad 0 \leq L_{is} \leq Ls \qquad\qquad (3a)$$

$$L_i' = b \cdot L_i \quad \text{für} \quad Ls < L_{is} \leq L\max \qquad\qquad (3b).$$

Der Steigungsfaktor a ist hierbei größer als 1, während der Steigungsfaktor b kleiner als 1 ist. Der erste Steigungsfaktor a ist hierbei für die Abbildungskurve 14A größer als für die Abbildungskurve 13A, während der zweite Steigungsfaktor b für die Abbildungskurve 14A kleiner als der zweite Steigungsfaktor für die Abbildungskurve 13A ist.
Für die durch die zweiten Abbildungskurven 13B, 14B bewirkte Abbildung gilt:

$$L_i' = c \cdot L_i \quad \text{für} \quad 0 \leq L_{is} \leq Ls \qquad\qquad (4a)$$

$$L_i' = d \cdot L_i \quad \text{für} \quad Ls < L_{is} \leq L\max \qquad\qquad (4b).$$

$L_{is}$ bezeichnet hierbei den Schwellenwert, für den beispielsweise $L_{is}$ = Lmax/2 gilt. Der Steigungsfaktor c ist kleiner als 1, während der Steigungsfaktor d größer als 1 ist. Für die in Figur 4 dargestellten Abbildungskurven gilt: a=d und b=c. Dies ist allerdings nicht zwingend. In diesem Zusammenhang sei darauf hingewiesen, dass das Maß der Verringerung des Intensitätswertes in einem Bild nicht gleich sein muss zum Maß der Vergrößerung des Intensitätswertes im nachfolgenden oder vorangehenden Bild, wenngleich durch die in den Figuren 3 und 4 dargestellten Abbildungskurven eine solche Gleichheit erreicht wird.

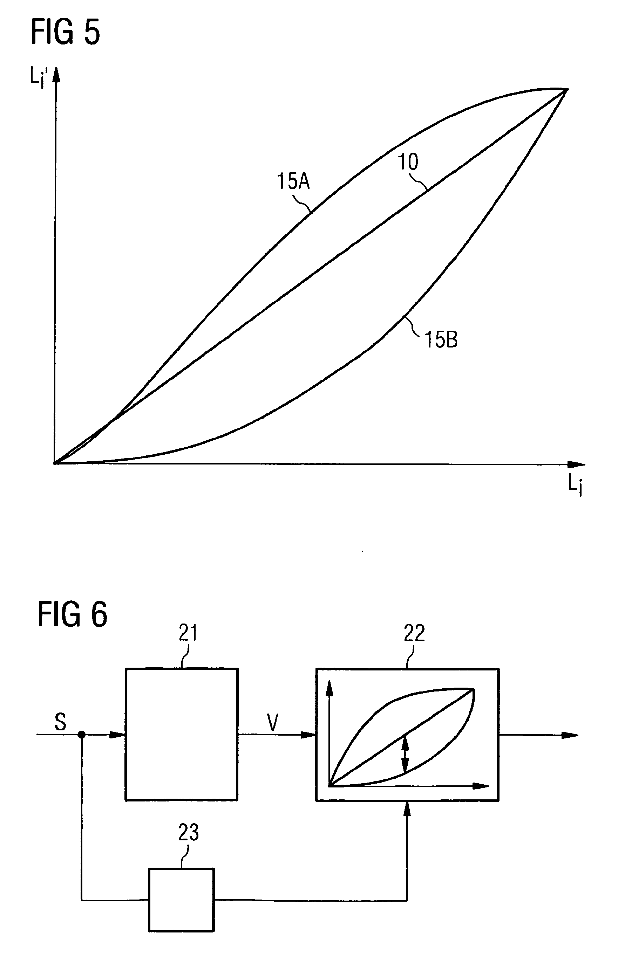

Figur 5 zeigt ein Beispiel mit zwei solchen bezüglich der identischen Abbildungskurve 10 nicht symmetrischen Abbildungskurven. Eine erste 15A dieser Abbildungskurven verläuft abschnittsweise unterhalb der identischen Abbildungskurve 10 und abschnittsweise oberhalb der identischen Abbildungskurve 10, während eine zweite 15B dieser Abbildungskurven für alle zugeordneten Intensitätswerte $L_i$ unterhalb der identischen Abbildungskurve verläuft. Mit anderen Worten: Es gibt einen Bereich der zugeordneten Intensitätswerte $L_i$, der zwischen Null und einem vorgegebenen Schwellenwert liegt, für den die Intensitätswerte in beiden aufeinanderfolgenden Bildern reduziert werden. Für Intensitätswerte $L_i$ oberhalb dieses Schwellenwertes werden modifizierte Intensitätswerte für aufeinanderfolgende Bilder durch abwechselndes Anheben und Absenken der Intensitätswerte gegenüber zugeordneten Intensitätswerten erhalten. Normiert man diese beiden Kurven auf $L_{max}$ (die drei normierten Kurven schneiden sich dann bei 1) so gilt in dem Beispiel für die obere 15A der normierten Kurven:

$$L_i' = (0,4 \cdot L_i^2 + 0,6 \cdot L_i)^{1,8} \qquad\qquad (5a)$$

und für die untere 15B der normierten Kurven:

$$L_i' = (-L_i^2 + 2 \cdot L_i)^{1,4} \qquad\qquad (5b).$$

Die Anhebung und Absenkung der Intensitätswerte der Bildpunkte eines Bildbereiches ist in erläuterter Weise abhängig von dem für den jeweiligen Bildbereich ermittelten Bewegungsmaß. Für die Ermittlung dieses Bewegungsmaßes gibt es verschiedene Möglichkeiten, von denen nachfolgend einige beispielhaft erläutert werden.

Bei einem Ausführungsbeispiel ist vorgesehen, ein Bewegungsmaß für einen Bildbereich dadurch zu ermitteln, dass bildpunktweise Differenzen zwischen Bildpunktwerten der dem Bildbereich zugeordneten Bildpunkte für zwei aufeinanderfolgende Bilder der Bildfolge ermittelt werden und dass Beträge dieser Differenzen oder geradzahlige Potenzen dieser Differenzen aufaddiert werden. Zur Erläuterung sei der Bildbereich (x,y) des Bildes F(k) betrachtet. V(x,y,k) bezeichnet nachfolgend ein zu diesem Bildbereich ermitteltes Bewegungsmaß. Für eine Ermittlung dieses Bewegungsmaßes unter Verwendung des Bildes F(k) und des zeitlich nachfolgenden Bildes F(k+1) gilt dann:

$$V(x,y,k) = \sum_i \left| P_i(x,y,k) - P_i(x,y,k+1) \right| \qquad (6).$$

$P_i(x,y,k)$ bezeichnet hierbei die den Bildpunkten des Bildbereiches in dem Bild F(k) zugeordneten Bildinformations-werte, während $P_i(x,y,k + 1)$ die den Bildpunkten dieses Bildbereiches in dem nachfolgenden Bild F(k + 1) zugeordneten Bildinformationswerte bezeichnet. Bildinformationswerte können in diesem Zusammenhang entweder den Bildpunkten zugeordnete Helligkeitswerte (Luminanzwerte) oder Chrominanzwerte sein. Anstelle der Betragsbildung können in dieser Gleichung (4) auch geradzahlige Potenzen der Differenzen verwendet werden.

Der Wert eines anhand Gleichung (4) ermittelten Bewegungsmaßes ist umso größer, je stärker die den Bildpunkten des Bildbereiches zugeordneten Bildinformationswerte in den zwei aufeinanderfolgenden Bildern voneinander abweichen. Je größer dieses Bewegungsmaß ist, das heißt je stärker die den Bildpunkten zugeordneten Bildinformationswerte voneinander abweichen, umso größer ist der Bewegungsanteil eines in dem jeweiligen Bildbereich der Bildfolge dargestellten Objekts.

Das anhand von Gleichung (4) ermittelte Bewegungsmaß für einen Bildbereich wird bei einem Ausführungsbeispiel der Erfindung für zwei aufeinanderfolgende Bilder verwendet, das heißt dasselbe Bewegungsmaß dient als Parameter für die Anhebung der Intensitätswerte in dem einen Bild und als Parameter für die Absenkung der Intensitätswerte in dem anderen Bild. Mit anderen Worten: das anhand des oben erläuterten Vergleichs von Bildinformationswerten ermittelte Bewegungsmaß wird dem Bildbereich (x,y) in den beiden Bildern F(k), F(k+1) zugeordnet, die für die Ermittlung des Bewegungsmaßes herangezogen wurden. Für das oben erläuterte Ausführungsbeispiel bedeutet dies:

$$V(x,y,k + 1) = V(x,y,k) \qquad (7).$$

Aus Stabilitätsgründen können die den Bildbereichen für die einzelnen Bilder zugeordneten Bewegungsmaße zusätzlich zeitlich und/oder räumlich gefiltert werden. Hierzu werden - beispielsweise anhand des zuvor erläuterten Verfahrens - den Bildbereichen der einzelnen Bilder zunächst Bewegungsmaße zugeordnet, die anschließend zeitlich und/oder räumlich gefiltert werden, um den Bildbereichen jeweils ein gefiltertes Bewegungsmaß zuzuordnen, das anschließend für die Modifikation der Intensitätswerte verwendet wird. Für ein zeitlich gefiltertes Bewegungsmaß $V^t(x, y, k)$ des Bildbereiches (x, y) in dem Bild F(k) gilt beispielsweise:

$$V'(x,y,k) = FI\left[ V(x,y,k), V(x,y,k-1), V(x,y,k+1) \right] \qquad (8).$$

FI[.] bezeichnet hierbei eine Filterfunktion, beispielsweise eine Tiefpassfilterfunktion, eine Medianfilterfunktion oder auch eine Maximumfunktion, die als Filterwert das Maximum der Filterwerte (die den in den eckigen Klammern angegebenen Werten entsprechen) ausgibt, oder eine Minimumfunktion, die als Filterwert das Minimum der Filterwerte ausgibt. V(x,y,k - 1) bezeichnet das Bewegungsmaß des Bildbereiches (x,y) in dem dem Bild F(k) vorangehenden Bild F(k - 1). Entsprechend bezeichnet V(x,y,k + 1) das Bewegungsmaß des Bildbereichs (x, y) in dem Bild F(k + 1). Die anhand von Gleichung 5 erläuterte Filterfunktion ist lediglich als Beispiel zu verstehen. Es sei darauf hingewiesen, dass sich eine zeitliche Filterung der Bewegungsmaße auch über mehr als drei aufeinanderfolgende Bilder erstrecken kann.

Ein räumlich gefiltertes Bewegungsmaß zu einem Bildbereich wird erhalten, indem innerhalb eines Bildes Bewegungsmaße wenigstens einiger benachbart zu dem betrachteten Bildbereich angeordneter Bildbereiche gefiltert werden. Für ein räumlich gefiltertes Bewegungsmaß $V^s(x,y,k)$ gilt beispielsweise:

$$V^s(x,y,k) = FI\left[V(x-i, y-j, k)\big| i = -1,0,1; j = -1,0,1\right] \qquad (9).$$

Für die Filterung werden hierbei das dem Bildbereich (x, y) zunächst zugeordnete Bewegungsmaß und die Bewegungsmaße aller sich unmittelbar an diesen Bildbereich anschließender Bildbereiche berücksichtigt, d.h. der Bildbereiche mit den Koordinaten (x, y+1), (x,y-1), (x-1,y-1), (x-1,y), (x-1,y+1), (x+1,y-1), (x+1,y), (x+1,y+1).

Auch dies ist lediglich als Beispiel für eine räumliche Filterung zu verstehen. So können beispielsweise auch nur einige, jedoch nicht alle, der benachbart zu dem betrachteten Bildbereich angeordneten Bildbereich berücksichtigt werden. Des Weiteren können auch Bildbereiche für die Filterung berücksichtigt werden, die sich nicht unmittelbar an den betrachteten Bildbereich anschließen. Die Filterfunktion FI[.] gemäß Gleichung 6 ist entsprechend der Filterfunktion gemäß Gleichung 5 beispielsweise eine Tiefpassfilterfunktion, eine Medianfilterfunktion oder eine Maximum- oder Minimumfilterfunktion.

Selbstverständlich können eine zeitliche Filterung und eine räumliche Filterung der Bewegungsmaße auch kombiniert werden, um ein gefiltertes Bewegungsmaß zu einem Bildbereich zu erhalten. So können beispielsweise für die Filterung sowohl die Bewegungsmaße solcher Bildbereiche verwendet werden, die in dem selben Bilder wie der betrachtete Bildbereich angeordnet sind, und solche Bildbereiche, die in zeitlich benachbarten Bildern an der selben Position wie der benachbarte Bildbereich angeordnet sind. Darüber hinaus besteht auch die Möglichkeit, in zeitlich benachbarten Bildern solche Bildbereiche zu betrachten, deren Position benachbart zur Position des betrachteten Bildbereiches liegt.

Das zuvor erläuterte Verfahren eignet sich insbesondere im Zusammenhang mit einem Verfahren zur bewegungskompensierten Interpolation von Zwischenbildern. Bei einem solchen Verfahren, bei dem zwischen zwei zeitlich aufeinanderfolgenden Bildern durch Interpolation ein Zwischenbild eingefügt wird, werden in bekannter Weise Bewegungsvektoren ermittelt, die einzelnen Bildbereichen des zu interpolierenden Zwischenbildes zugeordnet sind. Diese Bewegungsvektoren werden für die Interpolation des Bildinhaltes des Zwischenbildes benötigt. Diese Bewegungsvektoren enthalten unmittelbar eine Information über Bewegung des Bildinhaltes in dem betrachteten Bildbereich. Als Bewegungsmaß kann beispielsweise der Betrag des dem Bildbereich zugeordneten Bewegungsvektors verwendet werden. Das Bewegungsmaß ist dabei umso größer, je länger der Bewegungsvektor ist.

Für die bisherige Erläuterung wurde davon ausgegangen, dass die Bilder der Bildfolge jeweils mehrere Bildbereiche aufweisen, deren Intensität bzw. Helligkeit getrennt voneinander variiert werden kann. Alternativ besteht die Möglichkeit, das gesamte Bild als einen einzigen Bildbereich zu betrachten und die Helligkeit des Gesamtbildes abhängig von der in dem gesamten Bild vorkommenden Bewegung zu variieren. Ein Bewegungsmaß für das Gesamtbild kann beispielsweise unter Verwendung des anhand von Gleichung (4) erläuterten Verfahrens ermittelt werden.

Figur 5 veranschaulicht schematisch eine Vorrichtung zur Durchführung des zuvor erläuterten Verfahrens. Diese Vorrichtung umfasst eine Bewegungsdetektionseinrichtung 21, der ein die Videobildfolge repräsentierendes Videosignal S zugeführt ist. Diese Bewegungsschätzeinrichtung 21 ist dazu ausgebildet, Bewegungsmaße zu einzelnen Bildbereichen der durch das Videosignal S repräsentierten Videobildfolge zu ermitteln. Das Videosignal S und die am Ausgang der Bewegungsschätzeinrichtung 21 zur Verfügung stehenden Bewegungsmaße V sind einer Modifikationseinrichtung 22 zugeführt, die Helligkeitswerte der einzelnen Bildbereiche nach Maßgabe der Bewegungsmaße V abwechselnd anhebt und absenkt. Das Bezugszeichen 23 in Figur 5 bezeichnet ein Verzögerungsglied, welches das Videosignal S verzögert, bis am Ausgang der Bewegungsschätzeinrichtung die für die einzelnen Videobilder ermittelten Bewegungsmaße vorliegen.

Für die bisherige Erläuterung wurde davon ausgegangen, dass für einen betrachteten Bildbereich ein Bewegungsmaß ermittelt wird und dass unter Verwendung dieses Bewegungsmaßes Intensitätswerte der diesem Bildbereich zugeordneten Bildpunkte variiert werden. Eine nachfolgend erläuterte Variante betrifft ein Verfahren, bei dem für Bildfolgen mit bewegungskompensierten Zwischenbildern eine Variation der Intensität abhängig von einer Güte der Bewegungsschätzung erfolgt.

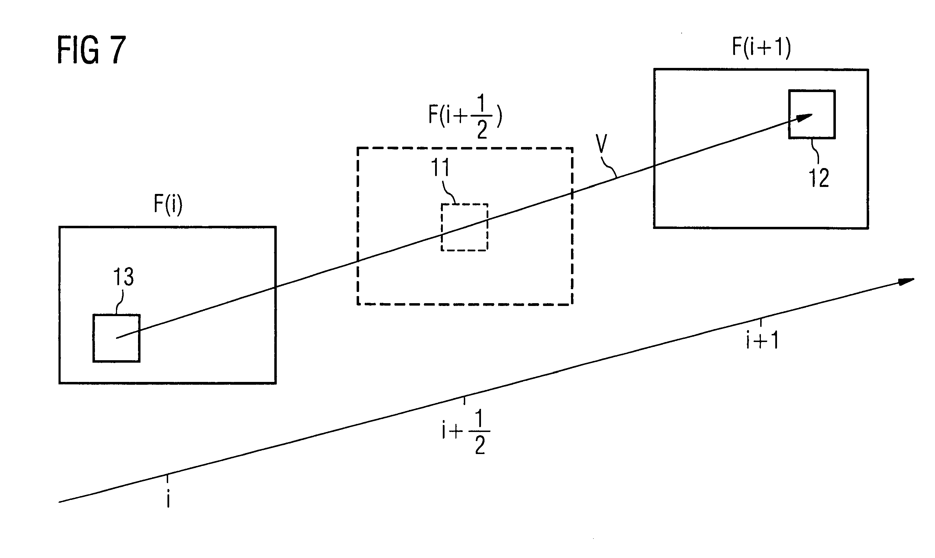

Bewegungskompensierte Zwischenbilder werden durch eine Zwischenbildinterpolation, bei dem zwischen zwei aufeinanderfolgenden (Original-)Bildern einer Bildfolge bewegungsrichtig ein Zwischenbild interpoliert wird, erzeugt. Bei einer solchen Zwischenbildinterpolation werden in hinlänglich bekannter Weise Bildbereichen des zu interpolierenden Bildes Bewegungsvektoren zugeordnet, und anhand dieser Bewegungsvektoren werden die Bildbereiche des Zwischenbildes interpoliert. Figur 7 zeigt schematisch einen zeitlichen Ausschnitt einer aus einem solchen Verfahren resultierenden Bildfolge mit bewegungskompensierten Zwischenbildern. Mit F(i) und F(i+1) sind hierbei Originalbilder der Bildfolge bezeichnet. F(i+1/2) bezeichnet ein zwischen den beiden Originalbildern bewegungsrichtig zu interpolierendes Zwischenbild, das beispielsweise zeitlich in der Mitte zwischen den Originalbildern liegt.

Für die bewegungsrichtige Interpolation des Zwischenbildes werden zu Bildblöcken des Zwischenbildes F(i+1/2) Bewegungsvektoren ermittelt. Das Bezugszeichen 11 bezeichnet beispielhaft einen solchen Bildblock des Zwischenbildes, und V bezeichnet einen diesem Bildblock zugeordneten Bewegungsvektor. Dieser Bewegungsvektor beschreibt eine Bewegungsrichtung von einem Bildblock 13 in dem Bild F(i) zu einem Bildblock 12 in dem Bild F(i+1) und gibt an, in welcher Weise sich der Inhalt des Bildblocks 13 von dem Bild F(i) zu dem Bild F(i+1) bewegt. Bei einer idealen Bewegungsschätzung, d.h. bei einer korrekt ermittelten Bewegung stimmen die Inhalte der am Anfangspunkt und am Endpunkt des Bewegungsvektors liegenden Bildblöcke 13, 12 überein. Die Bildinhalte dieser am Anfangspunkt und am Endpunkt des Bewegungsvektors liegenden Bildblöcke 13, 12 werden in bekannter Weise zur Interpolation des Bildinhaltes des Bildblockes 11 des Zwischenbildes F(i+1/2) verwendet.

Die Ermittlung von Bewegungsvektoren zu einem Bildbereich des Zwischenbildes kann fehlerbehaftet sein, das heißt eine Güte der Schätzung der Bewegungsvektoren bzw. eine Güte der Bewegungsschätzung kann also variieren. Eine Güte der Bewegungsschätzung kann ermittelt werden durch einen Vergleich der den Bildpunkten der Bildbereiche zugeordneten Bildinformationswerte. Für einen solchen Vergleich werden beispielsweise die Differenzen dieser Bildinformationswerte ermittelt.

Die Bildinformationswerte können bei einer RGB-Darstellung die Intensitätswerte der drei Farben selbst sein. Für einen Vergleich zweier Bildpunkte können hierzu die Differenzen der drei Farbanteile ermittelt und die Beträge oder geradzahlige Potenzen der drei Differenzen aufaddiert werden. Alternativ besteht auch die Möglichkeit nur einen oder zwei der Farbanteile zu vergleichen. Der so für zwei Bildpunkte erhaltene Differenzwert stellt einen Vergleichswert für zwei Bildpunkte der Bildbereiche dar. Ein Vergleichswert der Bildbereiche, und damit ein Maß für die Bewegungsschätzung wird beispielsweise durch Addieren der für die einzelnen Bildpunkte erhaltenen Vergleichswerte erhalten. Bei einer YUV-Darstellung können die den Bildpunkten zugeordneten Bildinformationswerte, die für eine Berechnung des Gütemaßes herangezogen werden, die Intensitätswerte (Y-Werte) und/oder die Chrominanzwerte (U- oder V-Werte) sein.

Im Idealfall, d.h. bei einer optimalen Bewegungsschätzung, stimmt der Bildinhalt des Bildbereiches 13 am Anfangspunkt des Bewegungsvektors mit dem Bildinhalt des Bildbereiches 12 am Endpunkt des Bewegungsvektors überein. Die Summe der Beträge der Bildpunktdifferenzen ist dann Null.

Bei der Variante des erfindungsgemäßen Verfahrens ist nun vorgesehen, bei einer Bildfolge, die abwechselnd aus einem Originalbild und einem interpolierten Zwischenbild besteht, für einzelne Bildbereiche des Zwischenbildes eine Güte der Bewegungsschätzung zu ermitteln und abhängig von der Güte der Bewegungsschätzung die Intensität der Bildpunkte dieses Bildbereiches zu variieren. Bei einer hohen Güte der Bewegungsschätzung soll die Intensität der Bildpunkte dieses Bildbereiches dabei möglichst unverändert bleiben. Bei einer geringen Güte der Bewegungsschätzung wird hingegen die Intensität der Bildpunkte des interpolierten Bildbereiches verringert, während die Intensität der Bildpunkte des entsprechenden Bildbereiches dem nachfolgenden Originalbild angehoben wird. Durch eine Verringerung der Intensität solcher "schlecht interpolierter" Bildbereiche eines Zwischenbildes fallen negative Effekte, die sich aufgrund einer schlechten Interpolation ergeben können, weniger stark auf.

**Patentansprüche**

1. Verfahren zur Bearbeitung einer Bildfolge mit aufeinanderfolgenden Videobildern, die jeweils wenigstens einen Bildbereich mit einer Anzahl von Bildpunkten aufweisen, denen jeweils wenigstens ein Intensitätswert zugeordnet ist, wobei das Verfahren für jeden Bildbereich aufweist:

   - Ermitteln eines Bewegungsmaßes, derart, dass das Bewegungsmaß ein Maß für eine zeitliche Änderung eines Bildinhalts des Bildbereiches darstellt,
   - von Videobild zu Videobild Variieren der Intensitätswerte der Bildpunkte des Bildbereiches gegenüber den zugeordneten Intensitätswerten, wobei ein Maß für die Variation der Intensitätswerte von dem ermittelten Bewegungsmaß abhängig ist und eine Änderung der Intensitätswerte gegenüber den zugeordneten Intensitätswerten um so stärker ist, je größer eine durch das Bewegungsmaß repräsentierte Bewegung ist.

2. Verfahren nach Anspruch 1, bei dem die Intensitätswerte der Bildpunkte abwechselnd von Bild zu Bild angehoben und verringert werden.

3. Verfahren nach Anspruch 2, bei dem zu Bildbereichen, die sich in zwei aufeinanderfolgenden an derselben Position befinden, ein gemeinsames Bewegungsmaß ermittelt wird und bei dem die Intensitätswerte der Bildpunkte des Bildbereiches in einem der beiden Bilder angehoben und in dem anderen der beiden Bilder verringert werden.

4. Verfahren nach Anspruch 3, bei dem ein Maß, um welches die Intensitätswerte in dem einen Bild angehoben werden, einem Maß entspricht, um welches die Intensitätswerte in dem anderen Bild verringert werden.

5. Verfahren nach einem der vorangehenden Ansprüche, bei dem die Ermittlung eines Bewegungsmaßes für einen Bildbereich eines Videobildes die Verfahrensschritte umfasst:

Ermitteln eines ersten Bewegungsmaße für den Bildbereich und Ermitteln eines ersten Bewegungsmaßes für denselben Bildbereich in wenigstens einem zeitlich nachfolgenden oder zeitlich vorausgehenden Bild, Filtern der ersten Bewegungsmaße, um das Bewegungsmaß zu erhalten.

**6.** Verfahren nach Anspruch 5, bei dem die Filterung eine Tiefpassfilterung ist.

**7.** Verfahren nach einem der vorangehenden Ansprüche, bei dem die Ermittlung eines Bewegungsmaßes für einen Bildbereich eines Videobildes die Verfahrensschritte umfasst:

Ermitteln eines ersten Bewegungsmaße für den Bildbereich und Ermitteln eines ersten Bewegungsmaßes für wenigstens einen zu dem Bildbereich benachbarten Bildbereich, Filtern der ersten Bewegungsmaße, um das Bewegungsmaß zu erhalten.

**8.** Verfahren nach Anspruch 7, bei dem die Filterung eine Tiefpassfilterung ist.

**9.** Verfahren nach einem der vorangehenden Ansprüche, bei dem die Filterung eine Tiefpassfilterung ist.

**10.** Verfahren nach einem der vorangehenden Ansprüche, bei dem jedem Bildpunkten Intensitätswerte für drei Farben zugeordnet sind und bei dem wenigstens einer der Intensitätswerte abhängig von dem ermittelten Bewegungsmaß variiert wird.

**11.** Verfahren nach Anspruch 10, bei dem alle drei Intensitätswerte abhängig von dem ermittelten Bewegungsmaß variiert werden.

**12.** Verfahren nach einem der Ansprüche 1 bis 9, bei dem jedem Bildpunkt ein Helligkeitswert (Luminanzwert) und zwei Farbwerte (Chrominanzwert) zugeordnet ist und bei dem der Helligkeitswert abhängig von dem ermittelten Bewegungsmaß variiert wird.

**13.** Verfahren zur Bearbeitung einer Bildfolge, die Originalbilder und zwischen jeweils zwei Originalbildern wenigstens ein bewegungskompensiertes Zwischenbild mit wenigstens einem Bildbereich aufweist, wobei der wenigstens eine Bildbereich eine Anzahl von Bildpunkten aufweist, denen jeweils wenigstens ein Intensitätswert zugeordnet ist, und wobei das Verfahren aufweist:

- Ermitteln eines Gütemaßes einer Bewegungsschätzung des wenigstens einen Bildbereiches des Zwischenbildes,
- Variieren der Intensitätswerte der Bildpunkte des Bildbereiches des Zwischenbildes abhängig von dem ermittelten Gütemaß.

**14.** Verfahren nach Anspruch 13, bei dem die Intensitätswerte der Bildpunkte des Bildbereiches des Zwischenbildes unverändert bleiben, wenn das Gütemaß oberhalb eines vorgegebenen Schwellenwertes liegt.

**15.** Verfahren nach Anspruch 14, bei dem die Intensitätswerte der Bildpunkte des Bildbereiches des Zwischenbildes gegenüber den zugeordneten Intensitätswerten verringert werden, wenn das Gütemaß unterhalb des vorgegebenen Schwellenwertes liegt.

**16.** Verfahren nach Anspruch 15, bei dem die Intensitätswerte für Gütemaße unterhalb des Schwellenwertes um so stärker gegenüber den zugeordneten Intensitätswerten verringert werden, je kleiner das Gütemaß ist.

**17.** Verfahren nach einem der Ansprüche 15 oder 16, bei dem für Gütemaße unterhalb des Schwellenwertes Intensitätswerte des Bildbereiches in einem dem Zwischenbild vorausgehenden oder nachfolgenden Originalbild angehoben werden.

**18.** Verfahren nach einem der vorangehenden Ansprüche, bei dem dem wenigstens einen Bildbereich des Zwischenbildes ein Bewegungsvektor zugeordnet ist, der einen Anfangspunkt und einen Endpunkt aufweist, wobei der Anfangspunkt auf einen ersten Bildbereich in einem dem Zwischenbild vorausgehenden Bild und der Endpunkt auf einen zweiten Bildbereich in einem dem Zwischenbild nachfolgenden Bild zeigt, wobei der erste und zweite Bildbereich jeweils eine Anzahl von Bildpunkten, denen jeweils wenigstens ein Bildinformationswert zugeordnet ist, aufweist, und bei dem die Ermittlung des Gütemaßes einen Vergleich der den Bildpunkten des ersten und zweiten Bildbereiches zugeordneten Bildinformationswerte umfasst.

EP 2 017 784 A2

# FIG 1

F(k-1)

F(k)

F(k+1)

(x,y)

(x,y)

(x,y)

k-1

k

k+1

t

# FIG 2

P

B

## FIG 3

## FIG 4

## FIG 5

## FIG 6

FIG 7

F(i+1)

F(i+1/2)

11

F(i)

13

12

V

i+1

i+1/2

i

EP 2 017 784 A2

## IN DER BESCHREIBUNG AUFGEFÜHRTE DOKUMENTE

### In der Beschreibung aufgeführte Patentdokumente

- US 20060280249 A1, Poon

### In der Beschreibung aufgeführte Nicht-Patentliteratur

- **B.W. LEE et al.** Mastering the Moving Image: Refreshing TFT-LCDs at 120Hz. *SID '05, Digest,* 1583-1585
- **M. SCHU et al.** System-on_Silicon Solution for High Quality HDTV Video Deinterlacing and Frame Rate Conversion for Flat Panel Displays. *ADEAC 2005,* 25. Oktober 2005
- **M. SCHU ; P. RIEDER.** Frame Rate Conversion IC for 120 Hz Flat Panel Displays. *Electronic Displays,* 14. Februar 2007